# EUROPEAN PATENT APPLICATION

(11) **EP 1 158 422 A2**
(43) Date of publication of application: **28.11.2001**
(21) Application number: 00120366.0
(22) Date of filing: 16.09.2000
(51) Int. Cl.: G06F 17/30

(54) **Internet site search service system and method having an automatic classification function of search results**

(30) Priority: 16.05.2000 KR 0026066
(71) Applicant: LAS21 Co., Ltd., Kangnam-gu, Seoul (KR)
(72) Inventor: Lee, Hyung Joo, Seoul (KR); U Park, Min, Sungnam, Kyunggi-do (KR)
(74) Representative: Weitzel, Wolfgang, Dr.-Ing.

(57) **Abstract**

Disclosed is an internet site search service system and method having an automatic classification function of search results. A search server (30) builds index information with respect to plural web pages into a database, executes a search of the plural web pages built in the database according to specified search key words input for a web page search after a connection to the search server (30) with a communication program executed by the users of client personal computers (20), automatically classifies the search results according to the specified search key words that users input and detailed item key words including the search key words, and outputs the automatically classified search results to corresponding client personal computers (20).

## Description

### BACKGROUND OF THE INVENTION

### 1. Field of the Invention

The present invention relates to an internet site search service system having an automatic classification function of search results, and more particularly to an internet site search service system having an automatic classification function of search results capable of searching and recognizing in real time internet site information built in a database according to search key words and automatically classifying and providing to users the search results according to the search key words a user inputs and detailed item key words including the search key words.

### 2. Description of the Prior Art

In general, the internet is an open network through which anybody, anywhere in the world, can be freely connected to other computers he wants to hook up with the application of the common protocol of TCP/IP, and which is used for the transmission of basic character information and multimedia information according to the advancement of the data compression technology, together with diverse services such as electronic mails, file transfers, world wide web(WWW), and so on.

Such internet is rapidly spread in its use throughout domestic and foreign countries, so that the importance of the internet is rapidly emphasized as a strategic tool for reconsidering the efficiency and productivity over overall sectors of existing industries. Further, opportunities for brand-new businesses are continuously created through the internet, together with the expansion of business fields, so businessmen who want to use the internet is gradually increased in number.

That is, in recent, Sites are rapidly increased for providing diverse contents such as internet advertisements, internet broadcasts, on-line games, internet newspaper/magazines, search services, portal services, electronic commerce businesses, and so on, as businesses trough the internet.

Accordingly, computer users who want to obtain particular information need to use certain search engines enabling the users to find out numerous sites and various web documents existing in the internet.

In the beginning of internet services, such search engines called 'the first generation search engines' indexes respective sites and web documents at their sides to build a database, and use a searching method for directory services in which users can make access to final documents with a deeper ramification of the searched according to the subject search(or the menu search) of users and the predetermined subject classifications. The Yahoo(http://www.yahoo.com) may be referred to as the typical search engine of the first generation.

However, the increase of the internet, particularly the expansion of the size of the world wide web(WWW) does not allow the subject search as stated above to be smoothly performed. That is, since the materials a search engine holds should be increased in compliance with the explosive expansion of the size of the world wide web(WWW), the method of adding one material by identifying one web page by manual jobs as in the existing first search engine can not catch up the growth of the world wide web(WWW).

Accordingly, a concept of a robot or a spider causes the second generation search engine to appear. The second generation search engine automatically searches and indexes web pages to provide search services. The altavista(http://www.altavista.com) may be the typical second generation engine.

The above second search engine uses a key word search method, and second generation search engines search and provide all documents related to key words users inputs, but the users turn the second generation search engine away since a big volume of searched documents causes inconvenience to the users in that the users have to find out the contents they want from the searched documents again. Accordingly, despite of the burden of many resources in order to overcome the problem the second generation search engine has, the subject search services are still included which are used in the first generation search engine.

However, the first and second generation search engines as stated above just provides the documents searched by simple key words and boolean calculations to users, but do not provide the services of automatically carrying out classifications in real time based on the contents of searched documents. Accordingly, there exists a problem in that the first and second generation search engines do not provide statistical and intellectual search results.

Further, there exists another problem in that the search engines as stated above distracts the search purpose since a lot of search results are provided to the users who request the searches as well as the reliability and preciseness of the searched documents are deteriorated.

### SUMMARY OF THE INVENTION

Accordingly, in order to solve the above problems, it is an object of the present invention to provide an internet site search service system having an automatic classification function of search results capable of searching and recognizing in real time internet site information built in a database according to search key words and automatically classifying and providing to users the searched documents according to the search key words a user inputs and detailed item key words including the search key words.

It is another object of the present invention to provide an internet site search service system having an automatic classification function of search results capable of obtaining desired search results by easy searches for search beginners to use through a search method without separate operators in using a search engine as well as of automatically removing duplicated search results in case that documents searched through the search engine come out of the same source.

In order to achieve the above objects, the internet site search service system having an automatic classification function of search results according to the present invention comprises a communication network for connecting undefined plural communication lines and carrying out data communications therebetween; a plurality of client personal computers equipped with communication environments enabling connections to an external of providing search services open in the communication network, and for outputting key words that a user who wants to search inputs to the external search, receiving search results outputted from the external, and for displaying the received search results on a screen; and a search server for periodically searching a plurality of web pages open in the communication network to build index information into a database, searching documents related to the search key words based on the index information built in the database according to the search key words that the user inputs if the user of each client personal computer connected to the communication network inputs the search key words, producing detailed item key words including the search key words that the user inputs based on the search results and then automatically classifying the search results according to the search key words and the detailed item key words, and outputting the automatically classified search results to a corresponding client personal computer in real time.

Further, an internet site search service method having an automatic classification function of search results according to the present invention comprises the steps of: (1) building into a database index information with respect to a plurality of web pages in a search server; (2) carrying out connections to the search server according to communication program executions of users of a plurality of client personal computers;
(3) carrying out in the search server a search of the plurality of web pages built in the database according to specified search key words that the users of the plurality of client personal computers input; (4) automatically classifying the search results according to the specified search key words that the users input and the detailed item key words including the key words; and (5) outputting the automatically classified search results to corresponding personal computers.

### BRIEF DESCRIPTION OF THE DRAWINGS

The above objects and other advantages of the present invention will become more apparent by describing in detail a preferred embodiment thereof with reference to the attached drawings, in which:
FIG. 1 is a block diagram for schematically showing a structure of an internet site search service system having an automatic classification function of search results according to an embodiment of the present invention;
FIG. 2 is a block diagram for showing a structure of the search server of FIG. 1 in detail;
FIG. 3 is a view for showing an example of an automatic real time classification window in accordance with the search results of FIG. 1;
FIG. 4 is a flow chart for showing in detail operation processes of an internet site search service method having an automatic classification function of search results according to an embodiment of the present invention; and
FIG. 5 is a flow chart for showing in detail real time automatic classification processes of the search results of FIG. 4.

### DETAILED DESCRIPTION OF THE PREFERRED EMBODIMENT

Hereinafter, an internet site search service system having an automatic classification function of search results according to an embodiment of the present invention will be described in detail with reference to the accompanying drawings.

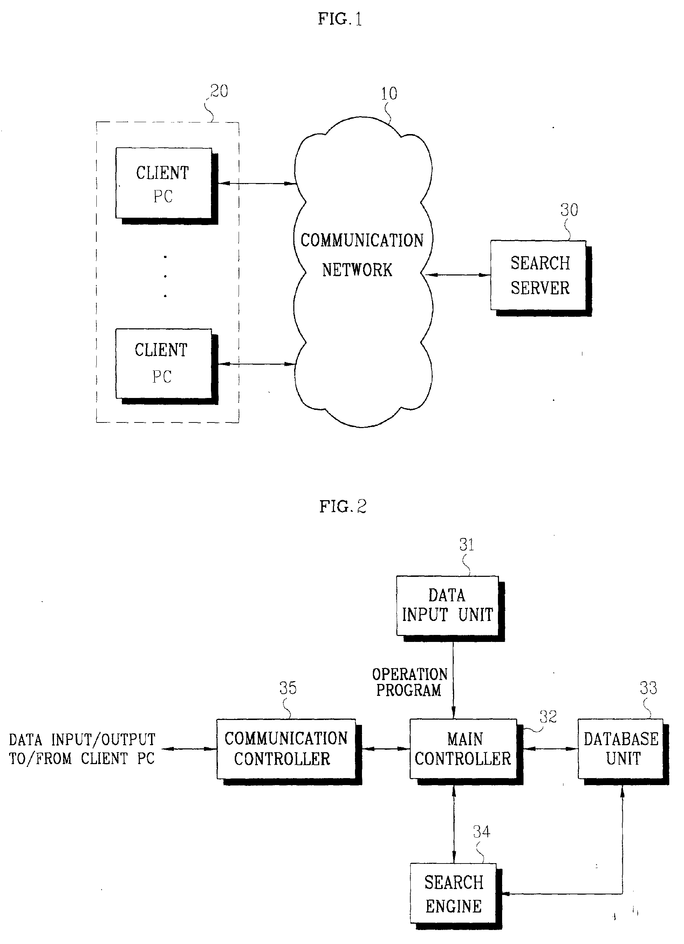

FIG. 1 is a block diagram for schematically showing a structure of an internet site search service system having an automatic classification function of search results according to an embodiment of the present invention.

As shown in FIG. 1, a communication network 10 is for an internet communication network, which connects plural client personal computers(PC) 20 to a search server 30 through communication lines to carry out data communications therebetween related to search requests and search result outputs.

The plural client personal computers 20 are equipped with communication environments such as web browsers and the like to be connected to the search server 30 for providing search services through the communication network 10, outputs to the search server 30, which will be described later, specified search key words each user who wants to carry out a search inputs, inputs and displays on a screen the search results outputted from the search server 30.

The search server 30 periodically searches plural web pages open in the communication network 10, build index information of searched web pages into a database, and searches documents related to key words based on the index information built in the database according to search key words users input if the search key words are inputted from the plural client personal computers 20 connected through the communication network 10.

Further, the search server 30 produces detailed item key words including the search key words the users input based on the search results carried out according to the search key words the users input, automatically classifies the search results according to the search key words and the detailed item key words, and outputs the automatically classified search results to corresponding client personal computers 20 in real time.

At this time, when the search server 30 produces the detailed item key words including the specified search key words the users of the client personal computers 20 input based on the search results, and in case that one or more key words in which a specified search key word is included from the index information searched according to specified search key words the users of the client personal computers 20 input are duplicated, the corresponding key word is produced as a detailed item key word.

Further, FIG. 2 is a block diagram for showing a structure of the search server 30 of FIG. 1 in detail.

As shown in FIG. 2, the data input unit 31 outputs to a main controller 32, which will be described later, an operation program of supporting search services that a server administrator inputs and the plural users of the client personal computers 20 use.

The main controller 32 periodically (for example, one day unit) searches plural web pages open in the communication network 10, controls corresponding web page index information to be stored in a database unit 33 which will be described later, and controls a search engine 34, which will be described later, to search plural web pages built in a database according to specified key words that the plural users of client personal computers 20 in the communication connections for using search services input.

Further, the main controller 32 controls the production of detailed item key words including specified search key words that users input based on the search results, automatically classifies plural search results searched through the search results 34 into the search key words that users input and the detailed item key words which are automatically produced, and outputs the automatically classified search results to corresponding client personal computers 20 in real time.

The database unit 33 stores index information of plural web pages open in the communication network 10 according to the control of the main controller 32.

The search engine 34 searches the index information of the plural web pages stored in the database unit 33 through specified search key words that users of the client personal computers 20 input according to the control of the main controller 32, and outputs searched data to the users of corresponding client personal computers 20 through the main controller 32.

A communication controller 35 inputs specified search key words that users who use search services input with the communication connections of the client personal computers 20, outputs the inputted specified search key words to the main controller 32, and outputs automatically classified search results to corresponding client personal computers 20 in real time according to the control of the main controller 32.

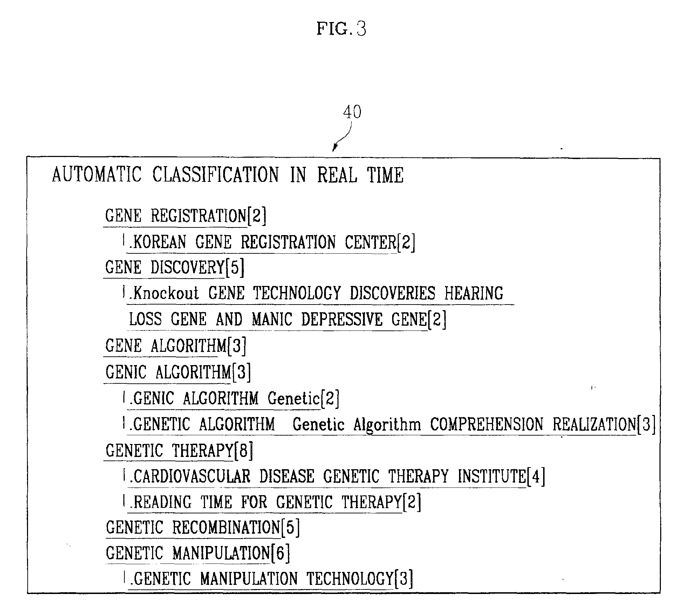

Further, FIG. 3 is a view for showing an example of an automatic real time classification window 40 in accordance with the search results of an internet site search system having an automatic classification function of search results according to an embodiment of the present invention. As shown in FIG. 3, even though a user of a client personal computer 20 inputs a single key word into a search server 30, the search server 30 produces a detailed item key word including a specified search key word that the user inputs based on plural search results, automatically classifies the search results according to the search key word and the detailed item key word to be provided to the user.

For example, in case that a user of a client personal computer 20 inputs a key word of 'gene' into the search server 30, the search server 30 produces detailed item key words such as 'gene engineering', 'gene registration', 'gene discovery' , 'genic algorithm', and the like which are similar with the key word of 'gene' based on plural search results, automatically classifies the search results according to the search key word and the detailed item key words to be provided to the user of the client personal computer 20.

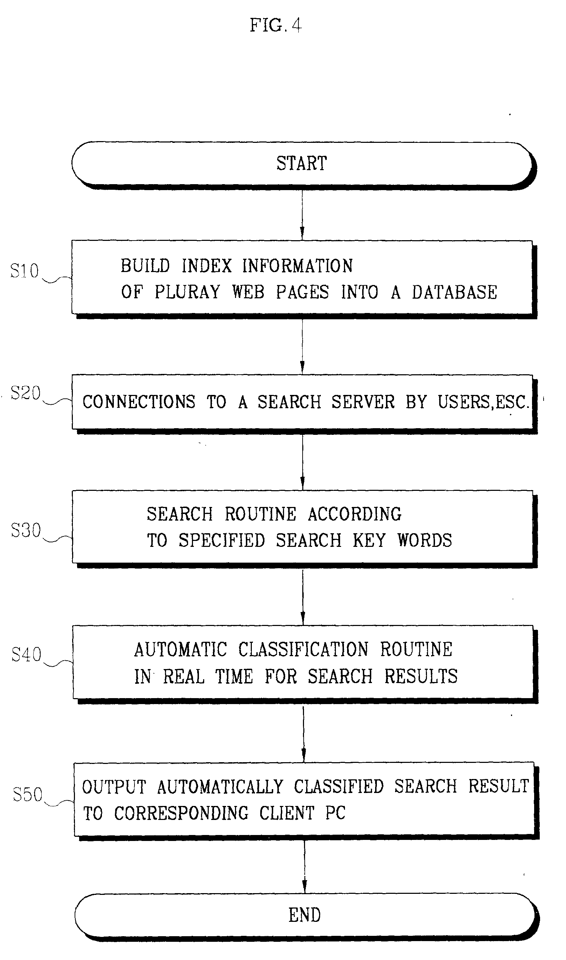

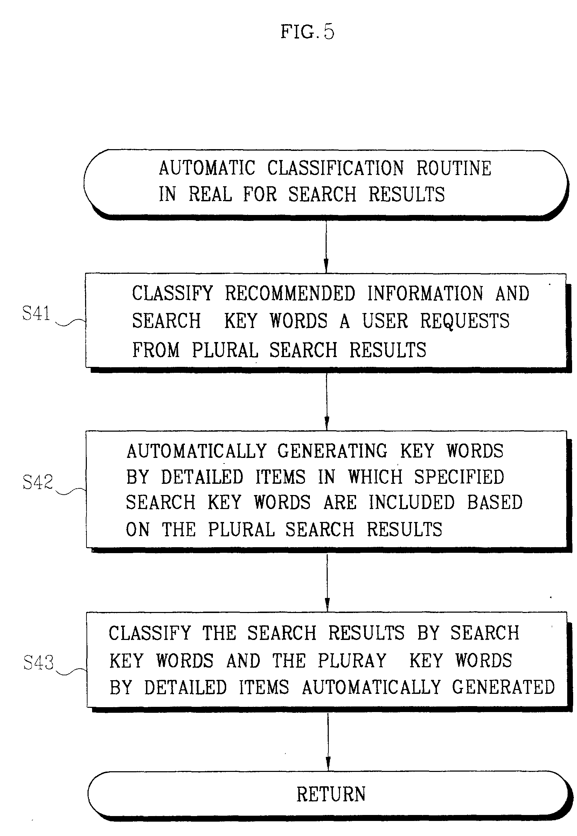

Further, an internet site search service method having an automatic classification function of search results according to an embodiment of the present invention will be described in detail with reference to FIG. 4 and FIG. 5.

FIG. 4 and FIG. 5 are flow charts for showing in detail operation processes of an internet site search service method having an automatic classification function of search results according to an embodiment of the present invention.

First of all, the search server 30 periodically searches information of plural web pages open in the communication network 10 in order to provide search services and builds index information of corresponding web pages into a database(S10).

After building the index information of the plural web pages into the database through the above step S10, the search server 30 confirms whether connections are made for communications according to communication program executions of the users of the plural client personal computers 20(S20).

Further, if the connections are made for the communications by the users of the plural client personal computers 20, the search server 30 searches the plural web pages built in the database according to certain search key words that a user inputs to obtain information of particular web pages(S30).

That is, if a user of a client personal computer 20 connected to the search server 30 inputs specified search key words of web pages to be searched in compliance with a certain form provided from the search server 30 and selects a search-executing button, the search server 30 searches index information corresponding to search key words that the user inputs out of the index information of the web pages built in the database.

If the search is carried out according to the specified search key words that the user inputs through the step S30 as stated above, the search server 30 grasps the search results in real time and automatically classifies the search results according to the specified search key words that the user of a corresponding client personal computer 20 inputs and the detailed item key words including the search key words(S40).

Described in more detail for the above, the search server 30 classifies recommended information related to the search words that a user inputs from plural search results obtained from a search of the plural web pages built in the database in compliance with a request of the user(S41). That is, the web sites and web documents most closely related to the search key words that a user inputs are classified and then recommended.

Further, the search server 30 automatically produces plural detailed item key words including the specified search key words that a user inputs based on the plural search results(S42), and classifies the plural search results searched through the search engine 34 according to the plural detailed item key words automatically produced(S43).

At this time, in the step S43 stated above, the search server 30 displays the number of the search results automatically classified according to the search key words and the plural detailed item key words for every corresponding detailed item key words, and the search results are classified and displayed in order closest to the specified search key words that a user inputs(refer to the attached FIG. 3).

Further, in case that there are documents searched from the same source through the search engine 34, the search server 30 excludes the same search results when provided to the user of a corresponding client personal computer 20.

Lastly, after automatically classifying in real time the plural search results searched according to specified search key words that a user requests through the step S40, the search server 30 outputs the classified search results to the corresponding client personal computer 20(S50).

At this time, in case that the plural search results according to the specified search key words that the user of the client personal computer 20 inputs are outputted, the search server 30 classifies the search results into best recommended site items, items automatically classified in real time, and search result items according to respective subject key words to be outputted.

As stated above, the internet site search service system having an automatic classification function of search results according to the present invention can remarkably enhance the preciseness of search results when compared to existing search engines since a search server carries out a search according to search key words that a user requests, grasps the search results, produces diverse detailed items according to the search key words by itself, and classifies the search results into detailed items to outputted to the user, and enables desired search results to be found out easily without carrying out the search through the use of complicated operators by users who use search services.

Further, the internet site search service system has an advantage in reducing the time for the users to screen the search results since it checks duplicated search results from the results searched in the search serve and excludes the same search results.

Although the preferred embodiment of the present invention has been described, it will be understood by those skilled in the art that the present invention should not be limited to the described preferred embodiment, but various changes and modifications can be made within the spirit and scope of the present invention as defined by the appended claims.

## Claims

1. An internet site search service system having an automatic classification function of search results, comprising:
a communication network for connecting undefined plural communication lines and carrying out data communications there between;
a plurality of client personal computers equipped with communication environments enabling connections to an external of providing search services open in the communication network, and for outputting key words that a user who wants to search inputs to the external search, receiving search results outputted from the external, and for displaying the received search results on a screen; and
a search server for periodically searching a plurality of web pages open in the communication network to build index information into a database, searching documents related to the search key words based on the index information built in the database according to the search key words that the user inputs if the user of each client personal computer connected to the communication network inputs the search key words, producing detailed item key words including the search key words that the user inputs based on the search results and then automatically classifying the search results according to the search key words and the detailed item key words, and outputting the automatically classified search results to a corresponding client personal computer in real time.

2. The internet site search service system as claimed in claim 1, wherein the search server includes:
a data input unit having an operation program supplied by a server administrator, wherein the operation program supports search services that the users of the plural of client personal computers use;
a main control unit for periodically searching a plurality of web pages open in the communication network, controlling the building of a database of web page index information, controlling a search of the index information built in the database according to an input of specified search key words from the users of the plurality of client personal computers, controlling the production of the detailed item key words including the search key words that a user inputs based on the search results and automatically classifying the search results according to the search key words and the detailed item key words that the user inputs, and controlling the output of search results automatically classified in real time;
a database unit for storing the index information with respect to the plurality of web pages open in the communication network according to the control of the main control unit;
a search engine for searching the index information of the plurality of web pages stored in the database unit through specified search key words that the users of the client personal computers input according to the main control unit, and outputting the searched data to the users of corresponding client personal computers through the main control unit; and
a communication control unit for receiving and outputting to the main control unit the specified search key words that a user inputs according to a communication connection of a client personal computer, and outputting to the client personal computer the search results automatically classified in real time according to the control of the main control unit.

3. The internet site search service system as claimed in claim 1 or 2, wherein the search server produces key words as detailed item key words in case that one or more key words including specified search key words from the index information searched according to the specified search key words that the users of the client personal computers input.

4. An internet site search service method having an automatic classification function of search results, comprising the steps of:
(1) building into a database index information with respect to a plurality of web pages in a search server;
(2) carrying out connections to the search server according to communication program executions of users of a plurality of client personal computers;
(3) carrying out in the search server a search of the plurality of web pages built in the database according to specified search key words that the users of the plurality of client personal computers input;
(4) automatically classifying the search results according to the specified search key words that the users input and the detailed item key words including the key words; and
(5) outputting the automatically classified search results to corresponding personal computers.

5. The internet site search service method as claimed in claim 4, wherein the step(4) includes the steps of:
(4-1) classifying recommended information related to the search key words that the users input from the search results of the plurality of web pages built in the database;
(4-2) automatically producing plural detailed item keywords including the specified search key words that the users input based on plural search results; and
(4-3) classifying the plural search results according to the specified search key words and automatically produced plural detailed item key words.

6. The internet site search service method as claimed in claim 5, wherein, in the step(4-3), the search server displays the number of the automatically classified search results for every search key words and detailed item key words in number according to the search key words and the plural detailed item key words.

7. The internet site search service method as claimed in claim 4, wherein, in the step(5), in case that the search server outputs the plural search results according to the search key words that the users of the client personal computers input, the search server classifies the plural search results into search result items according to best recommended site items, automatically classified real time items, search key words, and detailed item key words to be outputted.
